# EUROPÄISCHE PATENTSCHRIFT

(11) **EP 2 471 140 B1**
(45) Veröffentlichungstag und Bekanntmachung des Hinweises auf die Patenterteilung: **25.02.2015**
(21) Anmeldenummer: 10731518.6
(22) Anmeldetag: 08.07.2010
(51) Int. Cl.: H01M 10/42, H01M 10/48, H01M 10/0525

(54) **VERFAHREN UND EINRICHTUNG ZUM AUFBRINGEN EINES DRUCKES AUF EINE BATTERIE**
METHOD AND DEVICE FOR APPLICATION OF A PRESSURE TO A BATTERY
PROCÉDÉ ET DISPOSITIF POUR APPLIQUER UNE PRESSION SUR UNE BATTERIE

(30) Priorität: 28.08.2009 DE 102009028986
(43) Veröffentlichungstag der Anmeldung: 04.07.2012
(73) Patentinhaber: Samsung SDI Co., Ltd., Gyeonggi-do (KR); Robert Bosch GmbH, 70442 Stuttgart (DE)
(72) Erfinder: FETZER, Joachim, 73342 Bad-Ditzenbach (DE); LEUTHNER, Stephan, 71229 Leonberg (DE); FINK, Holger, 70567 Stuttgart (DE)
(74) Vertreter: Bee, Joachim
(86) Internationale Anmeldenummer: PCT/EP2010/059842
(87) Internationale Veröffentlichungsnummer: WO 2011/023445

(56) Entgegenhaltungen:
- EP-A1- 1 928 050
- WO-A1-97/30486
- WO-A1-99/05746
- WO-A2-03/071616

## Beschreibung

### Stand der Technik

Die vorliegende Erfindung betrifft ein Verfahren sowie eine Einrichtung zum Aufbringen eines Druckes auf eine Batterie, die wenigstens eine oder mehrere Zellen umfasst, zur Verringerung von Funktionsbeeinträchtigungen, die aufgrund unterschiedlicher Batterie-Ladezustände auftreten.

Batterien zur Speicherung von elektrischer Energie, insbesondere Lithium-Ionen-Batterien, dehnen sich beim Laden aus und ziehen sich beim Entladen wieder zusammen. Diese Volumen- bzw. Längenänderungen sind durch die Ein- und Auslagerungsvorgänge von Lithium-Ionen in den Aktivmaterialien der Elektroden bedingt. Durch das Einlagern von Lithium in das Kohlenstoffmaterial dehnt sich das Material aus. Diese Volumenvergrößerung wird über die Batteriezellenhülle bei entsprechender Verformbarkeit der Zelle weiter nach außen übertragen und führt somit zu einer Änderung wenigstens eines geometrischen Abmaßes der Batterie; insbesondere in Situationen, in denen die Batterie mehrere Zellen umfasst.

Bei Ausführung der Batterie mit einem im Wesentlichen starren Gehäuse bewirkt die Ausdehnung des Kohlenstoffmaterials einen Druckspannungsaufbau in der jeweiligen Batteriezelle. Dies kann dazu führen, dass aufgrund der Ausdehnung und des Zusammenziehens der Elektrodenmaterialien die einzelnen, in der Zelle angeordneten Schichten (Metallschicht, Kathodenmaterial, Separator, Anodenmaterial, ggf. Folie) mechanischen Belastungen ausgesetzt sind. Die Folge davon ist ein Anstieg des elektrischen Widerstandes in der Batterie und somit ein vermindertes Leistungsvermögen.

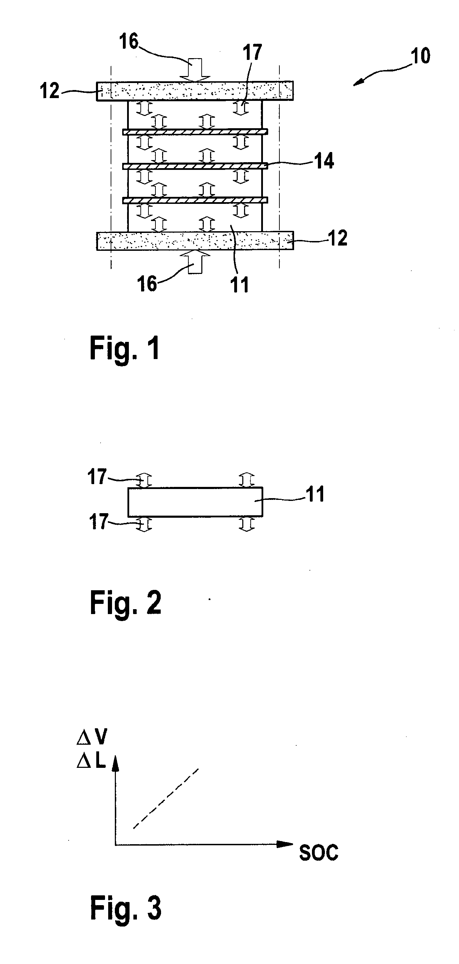

Zur Verhinderung der beschrieben mechanischen Belastung ist die Aufbringung eines konstanten Anpressdruckes bekannt, wie in Figur 1 dargestellt. In Figur 1 ist eine Batterie 10 mit einer Mehrzahl von Zellen 11 gezeigt, wobei die Zellen 11 in einem Paket bzw. in einem Stapel angeordnet sind. Durch über und unter dem Zellenpaket angeordnete Flansche 12 werden konstante Druckkräfte 16 in die Zellen 11 eingetragen. Daraus ergeben sich zwischen den Zellen herrschende Reaktionskräfte 17. Der konstante Anpressdruck soll die beschriebene unerwünschte Ablösung einzelner Schichten an den Elektrodenmaterialien verhindern. Ein solcher konstanter Anpressdruck findet insbesondere bei Batteriezellen für Hybrid-Fahrzeuge Anwendung. Diese Zellen werden meist mit einem Ladezustand (State of Charge, SOC) von durchschnittlich 30 bis 70 %, üblicherweise 50 %, betrieben. Die für Elektrofahrzeuge vorgesehenen Lithium-Ionen-Batterien werden mit Ladezuständen von 0 bis 100 % betrieben. Auch Batterien für Elekrofahrzeuge werden, ähnlich wie diejenigen von Hybridfahrzeugen aufgebaut.

Da bei größeren Ladezuständen das Volumen zunimmt und bei kleineren Ladezuständen das Volumen abnimmt, sind die Batteriezellen einer Batterie für ein Elektrofahrzeug zum Teil erheblichen Volumenausdehnungen und Volumenkontraktionen ausgesetzt. Dies ergibt sich durch fortwährend wechselnde Belastungen durch Entladungen beim Beschleunigen des Fahrzeuges und beim Laden bei Rekuperationsbetrieb der Bremsen.

Durch das feste Zusammenpressen der Batteriezellen unter einem konstanten Druck (ohne Längenänderung des Zellstapels) kann es allerdings insbesondere bei verstärkt auftretenden Volumenvergrößerungen und Volumenverringerungen der Aktivmaterialien innerhalb der Zelle dazu kommen, dass der Separator zu stark zusammengedrückt wird, wodurch sich ebenfalls der elektrische Innenwiderstand der Batteriezelle erhöht. Daneben kann es sein, dass Anodenmaterial und eventuell auch Kathodenmaterial elastisch oder plastisch verformt wird, wodurch es ebenfalls zu einem Anstieg des elektrischen Innenwiderstandes kommt.

Weitere mechanische Belastungen einer Batterie bzw. einer Batteriezelle können zum Beispiel durch Temperaturerhöhung innerhalb der Zelle und der daraus resultierenden Verdampfung von enthaltenen Elektrolyten entstehen, wobei der Dampf zu einem weiteren Druckanstieg innerhalb der Zelle führt. Insbesondere bei erhöhten Temperaturen können zudem chemische Reaktionen in der Batterie bzw. in einer Zelle zustande kommen, aus denen Gase entstehen, die einen zusätzlichen Druckanstieg innerhalb der Batteriezelle erzeugen.

Diese Belastungen sind umso höher, je größer die Ladezustandsschwankungen im Betrieb der Batterie sind.

Es ist somit bei herkömmlichen Batterien und insbesondere Lithium-Ionen-Batterien schwierig, einerseits die mechanischen Belastungen, die infolge zu Beschädigung von Schichten innerhalb einer Batteriezelle führen können, zu vermeiden und andererseits dafür zu sorgen, dass der Innenwiderstand in der Batterie bzw. in einer Batteriezelle im Laufe ihrer Betriebdauer nicht erhöht wird.

Aus der WO 2006/112639A1 ist bekannt, Piezo-Sensoren zur Erfassung des Batterie-Innendruckes anzuordnen. Durch die Erfassung der Überschreitung eines bestimmten vorgegebenen Innendruckwertes ist es möglich, geeignete Gegenmaßnahmen einzuleiten. Es ist jedoch nicht offenbart, welche Gegenmaßnahmen geeignet sind.

Der Erfindung liegt somit die Aufgabe zugrunde, ein Verfahren und eine Einrichtung zur Verfügung zu stellen, mittels derer in einfacher Weise ein vorzeitiger Verschleiß oder Alterungsprozess der Batterie unterbunden und ein hinreichend geringer Innenwiderstandswert gewährleistet werden kann.

Die vorliegende Aufgabe wird durch das Verfahren gemäß Anspruch 1 sowie durch die Einrichtung gemäß Anspruch 6 gelöst.

Vorteilhafte Ausgestaltungen des Verfahrens sind in den Ansprüchen 2 bis 5 und vorteilhafte Ausgestaltungen der erfindungsgemäßen Einrichtung sind in den Ansprüchen 6 und 7 angegeben.

Ergänzend wird erfindungsgemäß außerdem gemäß Anspruch 8 ein Kraftfahrzeug zur Verfügung gestellt, welches die erfindungsgemäße Einrichtung aufweist.

### Offenbarung der Erfindung

Zur Lösung der Aufgabe wird ein Verfahren zum Aufbringen eines Druckes auf eine Batterie zur Verfügung gestellt, wobei die Batterie wenigstens eine oder mehrere Zellen umfasst, um Verringerungen von Funktionsbeeinträchtigungen zu erreichen, die aufgrund unterschiedlicher Batterie-Ladezustände auftreten. Erfindungsgemäß wird der Druck in Abhängigkeit vom jeweiligen Batterie-Volumen und/oder vom jeweiligen Batterie-Ladezustand eingestellt. Das heißt, dass der Druck auf eine einzelne Zelle, oder bei Anordnung von mehreren Zellen in der Batterie, auf ein Zellenpaket gegeben wird. Bei einer Batterie mit nur einer Zelle ist somit das Batterievolumen gleichzeitig im Wesentlichen das Zellenvolumen und der Batterie-Ladezustand im Wesentlichen der Zellen-Ladezustand. Der Ladezustand bezeichnet dabei den jeweiligen Wert der in der Batterie gespeicherten Ladung. Bei einer hohen Ladung weist die Zelle bzw. Batterie ein großes Volumen auf und bei einer geringen Ladung ein geringes Volumen. Entsprechend des jeweiligen Ladungswertes und/oder des jeweiligen Volumens wird der Druck auf die Batterie eingestellt. Das heißt, dass die Ausgangsgröße zur Einstellung des Druckes das Volumen bzw. ein für das Volumen repräsentatives Maß, zum Beispiel die Länge und/oder der Ladungswert der Batterie ist. Durch diese Maßnahme der variablen Einstellung des Druckes in Abhängigkeit vom Volumen und/oder der Ladung der Batterie lässt sich deren zyklische Lebensdauer wesentlich steigern.

Es ist dabei vorgesehen, dass bei einer BatterieVolumenvergrößerung der Druck verringert wird und bei einer Batterie-Volumenverringerung der Druck vergrößert wird.

Alternativ oder hinzukommend ist vorgesehen, dass bei einer Vergrößerung des Ladezustandes der Batterie der Druck verringert wird und bei einer Verringerung des Ladezustandes der Batterie der Druck vergrößert wird. Dies bedeutet zum Beispiel, dass bezogen auf einen Ladezustand und einem Volumen mit einer Batterie mit einer Ladung von 50 % bei einer Ladungssteigerung auf 60 % und entsprechender Volumenvergrößerung der Druck verringert wird, und bei einer Ladung von zum Beispiel 30 % und damit verbundener Volumenverringerung der Druck entsprechend vergrößert wird. Daraus ist ersichtlich, dass einfache Druckfedern zur Ausübung des äußeren Druckes auf die Batterie oder die Zellen nicht eingesetzt werden können, da diese bei Volumenvergrößerung und damit verbundener Längenvergrößerung zusammengedrückt werden würden und demzufolge höhere Druckkräfte auf die Batterie bewirken würden. Erfindungsgemäß ist jedoch genau das Gegenteil vorgesehen, nämlich dass bei Volumenvergrößerung geringere Druckkräfte aufgebracht werden. Vorzugsweise sollte dabei, ausgehend von einer Ladung von 50 %, bei einer Erhöhung der Ladung um jeweils 10 % die Druckkraft je nach Ladezustand um jeweils 5 - 50% gesteigert werden.

Das Verfahren kann dabei derart ausgestaltet sein, dass bei mehreren Zellen je Batterie der Druck von außen auf das Zellenpaket gerichtet wird und/oder zwischen den Zellen erzeugt wird. Vorteilhafterweise wird der Druck bei mehreren Zellen je Batterie von außen auf alle Zellen aufgebracht, wobei durch Anlegen der Zellen aneinander die Druckkraft von einer Zelle auf die jeweils benachbarte Zelle übertragen wird. Alternativ oder hinzukommend kann allerdings auch vorgesehen sein, dass zwischen den Zellen Aktoren angeordnet sind, die die Zellen mit Druckkräften beaufschlagen, so dass die Zellen voneinander weggedrückt werden und die jeweils äußeren Zellen des Zellenpaketes an Begrenzungselementen zur Anlage kommen, so dass die Druckerhöhung vom Inneren des Zellenpaketes ausgeht und Reaktionskräfte von den Begrenzungselementen wiederum in die äußeren Zellen eingetragen werden.

Es kann dabei vorgesehen sein, dass der Druck mittels wenigstens einer pneumatisch oder hydraulisch oder mechanisch betriebenen Druckerzeugungseinrichtung auf die Zelle bzw. auf das Zellenpaket aufgebracht wird. Die mechanische Ausgestaltung sollte dabei bevorzugt elektro-mechanisch, zum Beispiel mit einem Elektromotor und einer Spindel, die gegebenenfalls mit einer Druckfeder in Reihe geschaltet ist, erfolgen. Daneben ist auch eine mechanisch-hydraulische Druckerzeugungseinrichtung einsetzbar, die zum Beispiel eine Kolben-ZylinderEinheit und eine Pumpe aufweist. Außerdem ist eine mechanisch-pneumatische Druckerzeugungseinrichtung verwendbar, die zum Beispiel einen Verdichter und ein Gasreservoir umfasst. Die genannten pneumatischen, hydraulischen oder mechanisch betriebenen Druckerzeugungseinrichtungen sind dabei vorteilhafterweise mit einer Steuereinheit verbunden, die die Einstellung des jeweiligen erforderlichen Druckwertes in Abhängigkeit des Batterieladezustandes und/oder des Batterievolumens steuert bzw. regelt.

In besonderer Ausgestaltung ist vorgesehen, dass der Druck mittels wenigsten eines auf dem piezo-elektrischen Effekt basierenden Druckerzeugungsmittels erzeugt wird. Dabei kann das Piezo-Druckerzeugungsmittel an der Außenwand einer in einem Zellenpaket positionierten Zelle angeordnet sein und somit im Paket selbst angeordnet sein, oder das Piezo-Druckerzeugungsmittel ist lediglich an einem oder beiden äußeren Zellen des Zellenpaketes angeordnet und bringt somit von außen Druckkraft auf das Zellenpaket auf.

Bei Verwendung der Piezo-Druckerzeugungsmittel ist das erfindungsgemäße Verfahren insbesondere dann vorteilhaft ausgestaltet, wenn das Piezo- Druckerzeugungsmittel außerdem eingesetzt wird zur Ermittlung des Ladezustandes der Batterie. Das heißt, dass bei Änderung wenigstens der Länge, Breite oder Höhe der Batterie aufgrund unterschiedlicher Ladezustände eine Spannung im Piezo-Element auf Grund seiner Verformung erzeugt wird, aus deren Wert das Maß einer Verformung der auf das Piezo-Element wirkenden Batterie ableitbar ist.

Es lässt sich somit bei Batterie-Volumenänderung und damit einhergehender Änderung der Batteriemaße eine Formänderung von in der Nähe der Batterie fixierten Piezo-Elementen realisieren und damit die Volumenänderung der Batterie bzw. der darin enthaltenen Zelle oder Zellen detektieren bzw. messen. Umgekehrt lässt sich durch das Anlegen einer ausreichenden Spannung wiederum die Änderung der Form des Piezo-Druckerzeugungsmittels realisieren und somit die vom Piezo-Druckerzeugungsmittel auf die Batterie aufgebrachte Druckkraft variieren.
Die Piezo-Druckerzeugungsmittel und die Piezo-Elemente können die selben Bauteile sein.

Es wird außerdem erfindungsgemäß eine Einrichtung zum Aufbringen eines Druckes auf eine Batterie, die wenigstens eine oder mehrere Zellen umfasst, zur Verfügung gestellt, um die Verringerung von aufgrund unterschiedlicher Batterie-Ladezustände auftretenden Funktionsbeeinträchtigungen zu realisieren. Erfindungsgemäß ist die Einrichtung derart ausgestaltet, dass mit ihr ein Druck in Abhängigkeit vom jeweiligen Batterie-Volumen und/oder vom jeweiligen Batterie-Ladezustand auf die Batterie aufbringbar oder aufgebracht ist. Diese Einrichtung ist somit insbesondere zur Ausführung des erfindungsgemäßen Verfahrens geeignet. Bei Ausgestaltung der Batterie mit nur einer Zelle wird mit der Einrichtung die Druckkraft nur auf diese eine Zelle ausgeübt. Wenn die Batterie mehrere Zellen aufweist, wird die Druckkraft wenigsten auf eine, vorzugsweise jedoch auf alle Zellen des Zellenpaketes der Batterie ausgeübt. Dabei sollte die Einrichtung eine Steuereinheit und/oder Regeleinheit umfassen, mittels derer je nach erfasstem Batterie-Volumen und/oder Batterie-Ladezustand Signale zur Einstellung des jeweiligen Druckes generiert werden können.

Dabei ist die erfindungsgemäße Einrichtung vorteilhafterweise derart ausgestaltet, dass durch ihre Einwirkung auf die Batterie bei einer Batterie-Volumenvergrößerung der Druck verringerbar oder verringert ist und bei einer Batterie-Volumenverringerung der Druck vergrößerbar oder vergrößert ist, und/oder bei einer Ladezustandsvergrößerung der Druck verringerbar oder verringert ist und bei einer Ladezustandsverringerung der Druck vergrößerbar oder vergrößert ist. Dazu umfasst die erfindungsgemäße Einrichtung vorteilhafterweise wenigstens eine pneumatisch oder hydraulisch oder mechanisch wirkende Druckerzeugungseinrichtung. Vorteilhafterweise sollten diese Druckerzeugungseinrichtungen für den elektro-mechanischen oder mechanisch-hydraulischen oder mechanisch-pneumatischen Betrieb, wie in der Beschreibung des Verfahrens geschildert, ausgestaltet sein.

In besonderer Ausgestaltung umfasst die Einrichtung wenigstens ein auf dem piezo-elektrischen Effekt basierendes Druckerzeugungsmittel, mittels dessen durch Änderung der am Piezo- Druckerzeugungsmittel anliegenden Spannung der Druck auf die Batterie erzeugbar oder erzeugt ist. Dieses Piezo- Druckerzeugungsmittel kann auch zur Ermittlung des Ladezustandes der Batterie aufgrund der damit verbundenen Volumenänderung der Batterie und der damit einhergehenden Formänderung des Piezo-Elementes verwendet werden. Auch in dieser Ausgestaltung sollte die Einrichtung eine Rechnereinheit umfassen, mit der das vom Piezo- Druckerzeugungsmittel generierte Signal in eine Information über den Ladezustand der Batterie umgerechnet werden kann.

Die Einrichtung kann zudem eine Mess- und/oder Detektionseinrichtung aufweisen, mittels derer zum Beispiel die mechanische Belastung aufgrund angeschlossener Kühlungseinrichtungen, die Temperatur im Inneren der Batterie, der Batterie-Innendruck und/ oder die Zusammensetzung der Gase in der Batterie detektiert, gemessen und analysiert werden kann. Die von der angeschlossenen Kühlungseinrichtung bewirkte mechanische Belastung sollte dabei mit dem einzustellenden Druck verrechnet werden. Die Messung der Temperatur ist insbesondere zur rechnerischen Ermittlung einer Dampfbildung innerhalb der Batterie aus dort enthaltenen Elektrolyten zu verwenden, da sich in der Batterie erzeugter Dampf auf den Innendruck der Batterie auswirkt. Die Analyse der Gase, die sich gegebenenfalls aufgrund von chemischen Reaktionen ergeben, dient ebenfalls zur Feststellung des Batterie-Innendruckes. Dazu sollte die Einrichtung eine Rechnereinheit umfassen, die geeignet ist, die gemessenen und/oder analysierten Werte in Werte hinsichtlich der herrschenden Innendruckverhältnisse umzurechnen und sie einer Steuereinheit zuzuführen, die die theoretischen, errechneten Druckwerte mit den aufgrund der Volumenänderung und/oder der Ladezustandsänderung einzustellenden Druckwerte verrechnet.

Die Erfindung ergänzend wird außerdem ein Kraftfahrzeug, insbesondere ein Kraftwagen, zur Verfügung gestellt, welches wenigsten eine Batterie, insbesondere eine Lithium-Ionen-Batterie umfasst und außerdem eine erfindungsgemäß auf die Batterie wirkende erfindungsgemäße Einrichtung zum Aufbringen eines Druckes umfasst. Ein derartiges Kraftfahrzeug kann insbesondere ein Hybrid- oder Elektrofahrzeug, wie zum Beispiel ein E-Bike, sein. Daneben lässt sich das erfindungsgemäße Verfahren und die erfindungsgemäße Einrichtung aber auch für stationäre Batterien mit einem hohen Ladehub und hohen Anforderungen hinsichtlich der Ladezyklen, wie zum Beispiel auch für Elektrowerkzeuge vorgesehen, verwenden.

Die vorliegende Erfindung wird im Folgenden anhand der beiliegenden Zeichnungen erläutert.
Es zeigt dabei
- Figur 1:: Eine Batterie mit mehreren Zellen mit herkömmlicher, konstanter Druckbelastung gemäß des Standes der Technik
- Figur 2:: eine einzelne Batteriezelle,
- Figur 3:: ein Diagramm zur Darstellung der Volumen- oder Längenänderung in Abhängigkeit vom Ladezustand,
- Figur4:: das Ausdehnungsverhalten einer Batterie,
- Figur 5:: eine Batterie mit mehreren Zellen und einseitig angeordneten Piezo-Druckerzeugungsmitteln,
- Figur 6:: eine Batterie mit mehreren Zellen und dazwischen angeordneten Piezo- Druckerzeugungsmitteln.

Auf Figur 1 ist bereits zur Erläuterung des Standes der Technik Bezug genommen worden.

Figur 2 zeigt eine einzelne Batteriezelle 11, die einzeln oder in Kombination mit weiteren Zellen den Energiespeicher einer Batterie bildet. Bei Aufbringung von Druckkräften 16 entstehen an der Zelle 11 Reaktionskräfte 17 bei Anlage am Flansch 12 oder an einer weiteren Zelle 11. Das verdeutlicht, dass bei Einleitung einer Druckkraft 16 auf die Zelle diese die in die Zelle eingetragene Druckkraft auf die benachbarte Zelle weitergibt und auf der anderen Seite der Gegendruckkraft der benachbarten Zelle ausgesetzt ist.

In Figur 3 ist der Zusammenhang zwischen Volumenänderung bzw. Längenänderung einer Batterie und dem Ladezustand (SOC) dargestellt. An der Abszisse ist der Ladezustand SOC angetragen und an der Ordinate die Volumenänderung ΔV bzw. die Längenänderung ΔL. Es ist ersichtlich, dass bei Zunahme des Ladezustandes SOC das Volumen vergrößert wird. Bei im Wesentlichen Beibehaltung des Breitenmaßes und des Höhenmaßes der Batterie wird die Länge der Batterie vergrößert.

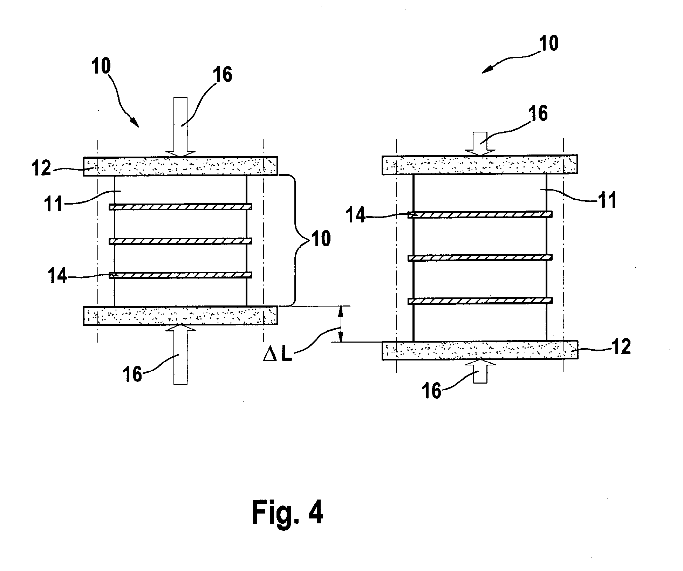

In Figur 4 ist ersichtlich, wie sich die relative Längenänderung ΔL bei Änderung des Ladezustandes der Batterie einstellt. Auf der linken Seite ist die Batterie mit einem Ladezustand dargestellt, der geringer ist als der auf der rechten Seite dargestellten Batterie 10. Es ist ersichtlich, dass zumindest bei Beibehaltung des Breiten- und Höhenmaßes die Batterie 10 eine relative Längenänderung ΔL ausführt, obwohl sie an beidseitig an dem aus den Zellen 11 gebildeten Zellenpaket anliegenden Flanschen 12 mit entgegengesetzt gerichteten Druckkräften 16 belastet ist. Durch die relative Längenänderung ΔL kann es im ungünstigsten Fall bei Eintragung konstanter Kräfte, wie bereits zum Stand der Technik beschrieben, zu einer mechanischen Belastung einzelner Schichten, wie zum Beispiel zwischen einer Zelle 11 und einer daran anliegenden Kühlplatte 14 kommen. Erfindungsgemäß werden daher, wie in Figur 4 anhand der unterschiedlich langen Druckkraft-Pfeile 16 dargestellt, bei der auf der rechten Seite in Figur 4 dargstellten Volumen-vergrößerten Batterie 10 die Druckkräfte 16 verringert.

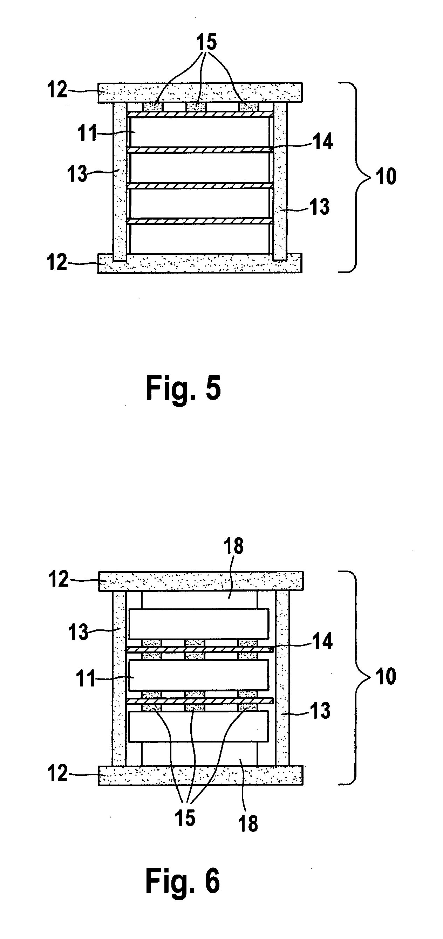

In Figur 5 ist die Situation dargestellt, in der ein Stapel von Batteriezellen 11 zwischen zwei Flanschen 12 und seitlich angeordneten Seitenwänden 13 aufgenommen ist. Die Batterie wird durch die Zellen 11 und die dazwischen angeordneten Kühlplatten 14 gebildet. Die Flansche 12 und die Seitenwände 13 sind Teil der erfindungsgemäßen Einrichtung, mittels derer der Druck von außen auf die Batterie realisierbar und einstellbar ist.
Das heißt, dass in dieser konstruktiven Ausgestaltung die Batterie bzw. der Zellenstapel keine wesentliche Volumen- bzw. Längenänderung ausführen kann. Es sind einseitig an dem Zellenstapel Piezo- Druckerzeugungsmittel 15 angeordnet. In Abhängigkeit vom ermittelten Ladezustandswert der Batterie bzw. der einzelnen Zellen 11 lässt sich eine jeweils unterschiedliche Spannung an die Piezo-Druckerzeugungsmittel 15 anlegen, wodurch diese unterschiedlich starke Druckkräfte auf den Stapel der Zellen 11 ausüben. Gegebenenfalls können kraftumformende Einrichtungen, zum Beispiel mittels Hebeln oder anderen Getriebeelementen, zwischen den Piezo- Druckerzeugungsmittel 15 und dem Zellenstapel zur Übersetzung der Kräfte angeordnet sein.
Der Vorteil der vorliegenden Erfindung besteht insbesondere darin, dass mittels des erfindungsgemäßen Verfahrens und der erfindungsgemäßen Einrichtung die Lebensdauer von Batterien, insbesondere Lithium-Ionen-Batterien, deutlich erhöht werden kann. Über die Kopplung der Funktion der piezo-elektrischen Elemente kann gleichzeitig auf den auf die Batterie gerichteten äußeren oder inneren Druck Einfluss genommen werden und zeitgleich oder minimal versetzt Alterungs- und/oder Ladezustände über die von der Batterie bewirkte Verformung des jeweiligen Piezo-Elements bestimmt werden.

In Figur 6 ist der Stapel der Zellen 11 ebenfalls von zwei Flanschen 12 und Seitenwänden 13 umfasst, jedoch sind diese derart dimensioniert, dass sich der Stapel der Zellen 11 zwischen den Flanschen 12 ausdehnen kann. In dieser Ausgestaltung sind beidseitig an den zwischen den Zellen 11 angeordneten Kühlplatten 14 Piezo- Druckerzeugungsmittel 15 angeordnet. Bei Anlage einer ausreichenden Spannung an den Piezo- Druckerzeugungsmittel 15 können diese die Verschiebung der Zellen 11 bewirken. Durch Anlagen der äußeren Zellen 11 des Zellenstapels an Andruckelemente 18 lassen sich somit Druckkräfte auf die einzelnen Zellen 11 erzeugen. Die Erfindung ist dabei nicht auf die konstruktive Ausgestaltung gemäß Figuren 5 und 6 eingeschränkt, sondern es kann vorgesehen sein, dass die Piezo- Druckerzeugungsmittel 15 sowohl an den äußeren Zellen 11 eines Zellenstapels als auch zwischen diesen Zellen 11 angeordnet sind. Piezo- Druckerzeugungsmittel 15 sind gegebenenfalls derart ausgestaltet, dass bei aufgrund von Volumenvergrößerung an den äußeren Zellen 11 auftretenden vergrößerten Druckkräften die Piezo- Druckerzeugungsmittel 15 ihre Länge verringern können, so dass der Abstand zwischen den Zellen 11 verringert wird und somit die insgesamte Druckbelastung auf die Zellen 11 verringert wird. Diese Ausgestaltung ist ebenfalls in der in Figur 5 gezeigten Ausführungsform realisierbar.

Vorzugsweise sollten die Piezo-Elemente bzw. Druckerzeugungsmittel auf eine Batterie wirken, die bereits leicht vorgespannt ist. Eine bevorzugte Vorspannung beträgt zwischen 0,04 - 0,4 N/mm².

## Patentansprüche

1. Verfahren zum Aufbringen eines Druckes auf eine Batterie, die wenigstens eine oder mehrere Zellen umfasst, zur Verringerung von Funktionsbeeinträchtigungen, die auf Grund unterschiedlicher Batterie-Ladezustände auftreten, wobei der Druck in Abhängigkeit vom jeweiligen Batterie-Volumen und/oder vom jeweiligen Batterie-Ladezustand eingestellt wird,
**dadurch gekennzeichnet,**
**dass** bei einer Batterievolumenvergrößerung der Druck verringert wird und bei einer Batterievolumenverringerung der Druck vergrößert wird.

2. Verfahren zum Aufbringen eines Druckes nach Anspruch 1,
**dadurch gekennzeichnet, dass** bei einer Vergrößerung des Ladezustands der Batterie der Druck verringert wird und bei einer Verringerung des Ladezustands der Batterie der Druck vergrößert wird.

3. Verfahren zum Aufbringen eines Druckes nach Anspruch 1 oder 2,
**dadurch gekennzeichnet,**
**dass** bei mehreren Zellen je Batterie der Druck von außen auf das Zellenpaket gerichtet wird und/ oder zwischen den Zellen erzeugt wird.

4. Verfahren zum Aufbringen eines Druckes nach wenigstens einem der vorhergehenden Ansprüche, **dadurch gekennzeichnet,**
**dass** der Druck mittels wenigstens eines auf dem piezoelektrischen Effekt basierenden Druckerzeugungsmittels erzeugt wird.

5. Verfahren zum Aufbringen eines Druckes nach Anspruch 4, **dadurch gekennzeichnet,**
**dass** das piezoelektrische Druckerzeugungsmittel außerdem eingesetzt wird zur Ermittlung des Ladezustandes der Batterie.

6. Einrichtung zum Aufbringen eines Druckes auf eine Batterie, die wenigstens eine oder mehrere Zellen umfasst, zur Verringerung von Funktionsbeeinträchtigungen, die auf Grund unterschiedlicher Batterie-Ladezustände auftreten, wobei die Einrichtung derart ausgestaltet ist, dass mit ihr der Druck in Abhängigkeit vom jeweiligen Batterie-Volumen und/oder vom jeweiligen Batterie-Ladezustand auf die Batterie aufbringbar oder aufgebracht ist,
**dadurch gekennzeichnet,**
**dass** die Einrichtung derart ausgestaltet ist, dass durch ihre Einwirkung auf die Batterie bei einer Batterievolumenvergrößerung der Druck verringert ist und bei einer Batterievolumenverringerung der Druck vergrößert ist, und/oder bei einer Ladezustandsvergrößerung der Druck verringert ist und bei einer Ladezustandsverringerung der Druck vergrößert ist.

7. Einrichtung zum Aufbringen eines Druckes nach Anspruch 6, **dadurch gekennzeichnet,**
**dass** die Einrichtung wenigstens ein auf dem piezoelektrischen Effekt basierendes Druckerzeugungsmittel umfasst, mittels dessen durch Änderung der am piezoelektrischen Druckerzeugungsmittel anliegenden Spannung der Druck auf die Batterie erzeugbar oder erzeugt ist.

8. Kraftfahrzeug, insbesondere Kraftwagen, umfassend wenigstens eine Batterie, insbesondere eine Lithium-Ionen-Batterie, und eine auf die Batterie wirkende Einrichtung zum Aufbringen eines Druckes nach Anspruch 6 oder 7.

## Claims

1. Method for application of a pressure to a battery, which comprises at least one or more cells, in order to reduce adverse effects on operation which occur because of different states of battery charge,
the pressure being adjusted as a function of the respective battery volume and/or of the respective state of battery charge, **characterized in that** the pressure is reduced when the battery volume increases, and the pressure is increased when the battery volume decreases.

2. Method for application of a pressure according to Claim 1, **characterized in that**
the pressure is reduced when the state of charge of the battery increases, and the pressure is increased when the state of charge of the battery decreases.

3. Method for application of a pressure according to Claim 1 or 2, **characterized in that**,
when there is a plurality of cells per battery, the pressure is directed at the pack of cells from the outside and/or is generated between the cells.

4. Method for application of a pressure according to at least one of the preceding claims, **characterized in that**
the pressure is generated by means of at least one pressure generating means based on the piezoelectric effect.

5. Method for application of a pressure according to Claim 4, **characterized in that**
the piezoelectric pressure generating means is furthermore used to determine the state of charge of the battery.

6. Device for application of a pressure to a battery, which comprises at least one or more cells, in order to reduce adverse effects on operation which occur because of different states of battery charge,
the device being embodied in such a way that the pressure can be applied to or is applied to the battery by said device as a function of the respective battery volume and/or of the respective state of battery charge, **characterized in that** the device is embodied in such a way that the pressure is reduced by the action of said device on the battery when the battery volume increases, and the pressure is increased by the action of said device when the battery volume decreases, and/or the pressure is reduced by the action of said device when the state of charge increases, and the pressure is increased by the action of said device when the state of charge decreases.

7. Device for application of a pressure according to Claim 6, **characterized in that** the device comprises at least one pressure generating means based on the piezoelectric effect, by means of which the pressure on the battery can be generated or is generated by changing the voltage applied across the piezoelectric pressure generating means.

8. Motor vehicle, in particular a motor car, comprising at least one battery, in particular a lithium ion battery, and a pressure application device according to Claim 6 or 7, which acts on the battery.

## Revendications

1. Procédé pour appliquer une pression sur une batterie, laquelle comprend au moins une ou plusieurs cellules, en vue de réduire des limitations fonctionnelles qui se produisent en raison des différents états de charge de la batterie, la pression étant réglée en fonction du volume respectif de la batterie et/ou de l'état de charge respectif de la batterie,
**caractérisé en ce**
**que** la pression est réduite en présence d'une augmentation du volume de la batterie et la pression est accrue en présence d'une diminution du volume de la batterie.

2. Procédé pour appliquer une pression selon la revendication 1, **caractérisé en ce que** la pression est réduite en présence d'une augmentation de l'état de charge de la batterie et la pression est accrue en présence d'une diminution de l'état de charge de la batterie.

3. Procédé pour appliquer une pression selon la revendication 1 ou 2, **caractérisé en ce que** dans le cas de plusieurs cellules par batterie, la pression est dirigée depuis l'extérieur sur le bloc de cellules et/ou générée entre les cellules.

4. Procédé pour appliquer une pression selon au moins l'une des revendications précédentes, **caractérisé en ce que** la pression est générée à l'aide d'au moins un moyen générateur de pression fonctionnant selon le principe de l'effet piézoélectrique.

5. Procédé pour appliquer une pression selon la revendication 4, **caractérisé en ce que** le moyen générateur de pression piézoélectrique est en outre utilisé pour déterminer l'état de charge de la batterie.

6. Dispositif pour appliquer une pression sur une batterie, laquelle comprend au moins une ou plusieurs cellules, en vue de réduire des limitations fonctionnelles qui se produisent en raison des différents états de charge de la batterie, le dispositif étant configuré de telle sorte qu'il peut appliquer ou qu'il applique la pression sur la batterie en fonction du volume respectif de la batterie et/ou de l'état de charge respectif de la batterie,
**caractérisé en ce**
**que** le dispositif est configuré de telle sorte que de par son effet sur la batterie, la pression est réduite en présence d'une augmentation du volume de la batterie et la pression est accrue en présence d'une diminution du volume de la batterie et/ou la pression est réduite en présence d'une augmentation de l'état de charge de la batterie et la pression est accrue en présence d'une diminution de l'état de charge de la batterie.

7. Dispositif pour appliquer une pression selon la revendication 6, **caractérisé en ce que** le dispositif comprend au moins un moyen générateur de pression fonctionnant selon le principe de l'effet piézoélectrique à l'aide duquel la pression peut être générée ou est générée sur la batterie en modifiant la tension appliquée aux bornes du moyen générateur de pression piézoélectrique.

8. Véhicule automobile, notamment voiture de tourisme, comprenant au moins une batterie, notamment une batterie aux ions de lithium, et un dispositif agissant sur la batterie pour appliquer une pression selon la revendication 6 ou 7.
